# EUROPÄISCHE PATENTSCHRIFT

(11) **EP 4 650 152 B1**
(45) Veröffentlichungstag und Bekanntmachung des Hinweises auf die Patenterteilung: **12.08.2026**
(21) Anmeldenummer: 24176202.0
(22) Anmeldetag: 16.05.2024
(51) Int. Cl.: B29C 65/02, B29C 65/18, B29C 65/78, B29C 65/00, B65B 65/00

(54) **TRAGRAHMEN FÜR EIN SIEGELGERÄT SOWIE SIEGELGERÄT UND HERSTELLUNGSVERFAHREN FÜR EINEN TRAGRAHMEN**
SUPPORT FRAME FOR A SEALING DEVICE, SEALING DEVICE AND METHOD FOR PRODUCING A SUPPORT FRAME
CADRE DE SUPPORT POUR UN APPAREIL DE SCELLEMENT AINSI QU'APPAREIL DE SCELLEMENT ET PROCÉDÉ DE FABRICATION D'UN CADRE DE SUPPORT

(43) Veröffentlichungstag der Anmeldung: 19.11.2025
(73) Patentinhaber: MELAG Medizintechnik GmbH & Co. KG, 10829 Berlin (DE)
(72) Erfinder: PANNWITZ, Thomas, 16761 Hennigdorf (DE); VON GRZYMALA, Benjamin, 16547 Birkenwerder (DE)
(74) Vertreter: Maikowski & Ninnemann Patentanwälte Partnerschaft mbB

(56) Entgegenhaltungen:
- EP-B1- 1 765 576
- NL-C2- 2 011 140

## Beschreibung

Die Erfindung betrifft einen Tragrahmen für ein Siegelgerät nach dem Oberbegriff des Anspruchs 1, ein Siegelgerät nach dem Oberbegriff des Anspruchs 13 sowie ein Herstellungsverfahren für einen Tragrahmen nach dem Oberbegriff des Anspruchs 15.

Siegelgeräte kommen bei der Versiegelung von Kunststofffolien zum Einsatz. Beispielsweise werden Durchlaufsiegelgeräte verwendet, um medizinische Sterilverpackungen zu verschließen. Hierzu wird eine Sterilverpackung, üblicherweise aus Kunststoff, entlang eines Transportweges des Durchlaufsiegelgeräts transportiert. Dabei wird die Verpackung zwischen zwei Heizelementen durchgeführt und erwärmt. Anschließend wird die Sterilverpackung zusammengepresst und so versiegelt. Durchlaufsiegelgeräte sind in Arztpraxen häufig in separaten, oft sehr kleinen Aufbereitungsräumen für medizinische Instrumente oder Praxislaboren aufgestellt. Deshalb sind möglichst geringe Geräteabmessungen für diese Geräte erstrebenswert.

Typischerweise verfügen Durchlaufsiegelgeräte über ein Gehäuse mit einer an der Front des Gerätes ausgebildeten Durchführung für zu versiegelnde Verpackungen. Innerhalb des Gehäuses ist üblicherweise ein Tragrahmen angeordnet, an dem die einzelnen funktionellen Komponenten des Durchlaufsiegelgeräts, oder einige davon, befestigt sind. Ein solcher Tragrahmen ist beispielsweise in der Druckschrift NL 2011 140 beschrieben.

In dem europäischen Patent EP 1 765 576 B1 ist eine Vorrichtung zur Heissversiegelung zweier Schichten Folienwerkstoff beschrieben. Zu den funktionellen Komponenten gehören eine Heizeinheit sowie eine Transporteinheit, die beide in der Regel im Bereich der Durchführung angeordnet sind. Ferner verfügen Durchlaufsiegelgeräte über eine Antriebseinheit bzw. einen Motor sowie eine Steuereinheit, die die Steuerelektronik zur Ansteuerung des Geräts umfasst.

Aufgrund der durch die Heizeinheit zur Erwärmung der zu versiegelnden Verpackungen erzeugten hohen Dauergebrauchstemperatur von 200°C oder mehr, heizt sich der Gehäuseinnenraum im Dauerbetrieb stark auf, und zwar umso stärker, je kleiner die Gehäuseoberfläche und das Gehäusevolumen sind, die die Wärme aufnehmen und ableiten können. Mit der Heizeinheit verbundene metallische Bauteile wirken dabei wie zusätzliche Heizkörper und führen zu einer weiteren Erwärmung. Dabei können im Gehäuseinnenraum Temperaturen von 70°C und mehr erreicht werden. Dies ist insbesondere für die Steuereinheit bzw. deren elektronische Bauelemente kritisch, deren thermische Belastungsgrenze typischerweise bei 70°C oder weniger liegt. Die Lebensdauer und Zuverlässigkeit der elektronischen Bauteile wird somit negativ beeinträchtigt, wodurch die Lebensdauer des gesamten Geräts verringert wird. Die Verwendung von elektrischen Bauelementen mit höheren Grenztemperaturen ist mit höheren Bauteilkosten verbunden, mithin wirtschaftlich nachteilig.

Gerade bei den für den Praxisgebrauch angestrebten kleinen Geräteabmessungen rückt die temperaturempfindliche Steuereinheit in enge räumliche Nähe zu der funktionsbestimmenden Heizeinheit, was wiederum eine stärkere, aktive Kühlung der Steuereinheit nötig macht, um die oben genannten Folgen abzuwenden. Eine stärkere, aktive Kühlung kann sich aber negativ auf die Regelgenauigkeit der Heizeinheit auswirken, insbesondere wenn die Regelung der Heizeinheit mittels einer einfachen Zwei-Punkt-Regelung erfolgt. Die Regelgenauigkeit eines im medizinischen Bereich Anwendung findenden Durchlaufsiegelgeräts ist jedoch normativ auf +/- 5°C beschränkt, vgl. DIN 58953-7, Abs. 6.3.2.3. Bei Verwendung spezieller Verpackungsmaterialien, wie beispielsweise PE, müssen Abschalttoleranzen eingehalten werden, beispielsweise von +/- 3°C, die noch höhere Anforderungen an die Regelgenauigkeit der Heizeinheit stellen. Auch sorgt eine stärkere, aktive Kühlung für zusätzliche Abwärme, die über das Gehäuse an die Umgebung abgeführt wird. Die vor allem aus hygienischen Gründen regelmäßig aus Metall gefertigte Gehäuseoberfläche darf eine normativ festgelegte Maximaltemperatur von 60°C nicht überschreiten, vgl. DIN EN 61010-1.

Angesichts der einleitend beschriebenen Effekte, ist es Ziel der vorliegenden Erfindung, ein Siegelgerät mit vergleichsweise geringen Geräteabmessungen zur Verfügung zu stellen, ohne dass hierdurch die Lebensdauer des Geräts verkürzt würde, und das bediensicher, regelgenau, und trotzdem kostengünstig in der Herstellung ist.

Die Aufgabe wird gelöst durch einen Tragrahmen für ein Siegelgerät mit den Merkmalen des Anspruchs 1 sowie durch ein Siegelgerät mit den Merkmalen des Anspruchs 13.

Der Tragrahmen ist ein Konstruktionselement für ein Siegelgerät zur Versiegelung von Folien bzw. Folienteilen, wie beispielsweise Kunststofffolien. Der Tragrahmen ist insbesondere ein Tragrahmen für ein Durchlaufsiegelgerät zur Versiegelung von medizinischen Sterilverpackungen. Der Tragrahmen weist eine Hauptebene mit einer Vorderseite und einer Rückseite auf. Beim Einbau in ein Siegelgerät, insbesondere ein Durchlaufsiegelgerät, teilt der Tragrahmen einen Gehäuseinnenraum des Siegelgeräts in einen vorderen Bereich und in einen hinteren Bereich, und zwar so, dass der vordere Bereich die Vorderseite des Tragrahmens beinhaltet und der hintere Bereich die Rückseite des Tragrahmens beinhaltet, insbesondere die Vorderseite des Tragrahmens den vorderen Bereich auf einer Seite begrenzt und die Rückseite des Tragrahmens den hinteren Bereich auf einer Seite begrenzt. Die übrigen Seiten des vorderen bzw. des hinteren Bereiches werden durch das Gehäuse begrenzt. Das Gehäuse ist beispielsweise ein im Wesentlichen quaderförmiges Metallgehäuse, das in einer Vorderseite eine schlitzförmige Öffnung zur Durchführung von Folien, beispielsweise Kunststofffolien und insbesondere medizinische Sterilverpackungen, aufweist. Die Begriffe "vorderer Bereich", "hinterer Bereich" bzw. "vorne" und "hinten" sind in Bezug auf die Lage der Durchführung von zu versiegelnden Folien im Gehäuse eines Siegelgeräts definiert. Der Tragrahmen bildet beispielsweise im eingebauten Zustand eine zur Vorderseite des Gehäuses parallel angeordnete Wand, die den Gehäuseinnenraum teilt. In einer Variante steht eine Außenkante der Hauptebene mit dem Gehäuse in Berührung, so dass der vordere und der hintere Bereich voneinander getrennt werden. Die Form der Hauptebene entspricht in dieser Variante im Wesentlichen einem Querschnitt des Gehäuses. In einer alternativen Variante steht die Außenkante der Hauptebene nur mit Teilen des Gehäuses in Berührung. Die Hauptebene erstreckt sich in dieser Variante nicht über den gesamten Querschnitt des Gehäuses. Der Tragrahmen weist mindestens ein Anbringungselement zur Anbringung einer funktionellen Komponente eines Siegelgeräts auf. Dies ermöglicht die Befestigung und/oder Lagerung von funktionellen Komponenten eines Siegelgeräts an bzw. im Tragrahmen. Funktionelle Komponenten eines Siegelgeräts umfassen beispielsweise eine Transporteinheit, die Folien, beispielsweise Kunststofffolien, entlang eines Transportweges zu einer Siegeleinheit transportiert; eine Heizeinheit, die die Folien, insbesondere Kunststofffolien, auf dem Transportweg erhitzt, sowie eine Siegeleinheit, die die eigentliche Versiegelung der Folien vornimmt. In der Siegeleinheit werden die erhitzten Folien, insbesondere Kunststofffolien, gegeneinander gedrückt und so in dem mit Druck beaufschlagten Bereich versiegelt. Funktionelle Komponenten eines Siegelgeräts umfassen aber beispielsweise auch eine Antriebseinheit, insbesondere für die Transporteinheit und/oder eine Siegeleinheit, und eine Steuereinheit, die die für die Ansteuerung des Siegelgeräts notwendige Steuerelektronik umfasst. Das Anbringungselement ist als Teil des Tragrahmens ausgeführt. Beispielsweise ist das mindestens eine Anbringungselement eine sich im Wesentlichen senkrecht zur Hauptebene erstreckende Säule oder eine sich im Wesentlichen senkrecht zur Hauptebene erstreckende durchgehende oder nicht durchgehende Öffnung zur Aufnahme eines Bauteils einer funktionellen Komponente, beispielsweise eines Lagers. In einer Variante weist der Tragrahmen eine Vielzahl von Anbringungselementen zur Befestigung der verschiedenen funktionellen Komponenten eines Siegelgeräts auf.

Der Tragrahmen der vorliegenden Erfindung zeichnet sich dadurch aus, dass der Tragrahmen ein thermisch isolierender Tragrahmen ist. Insbesondere ist der thermisch isolierende Tragrahmen geeignet, bei Einbau in ein Siegelgerät den Wärmeaustausch zwischen einem vorderen Bereich und einem hinteren Bereich zu vermindern oder zu unterbinden. Der Tragrahmen weist ein thermisch isolierendes Material, insbesondere auf seiner Oberfläche, auf. Beispielsweise ist die Oberfläche des Tragrahmens teilweise oder vollständig von einem thermisch isolierenden Material bedeckt, insbesondere so mit einem thermisch isolierenden Material bedeckt, dass ein Wärmetransport zwischen dem vorderen und dem hinteren Bereich reduziert oder vollständig unterbunden wird. In einer Variante sind Vorder- und/oder Rückseite des Tragrahmens mit einem thermisch isolierenden Material beschichtet. In einer alternativen Variante ist der Tragrahmen aus einem thermisch isolierenden Material gefertigt, d.h. der Tragrahmen besteht aus einem thermisch isolierenden Material. Ein thermisch isolierendes Material im Sinne der vorliegenden Erfindung ist ein Material, dass Wärme schlecht leitet, d.h. eine niedrige Wärmeleitfähigkeit λ hat. Das thermisch isolierende Material weist eine Wärmeleitfähigkeit λ auf, wobei λ ≤ 7 W/(m. K), insbesondere λ ≤ 1 W/(m. K), ist.

Mit dem erfindungsgemäßen Tragrahmen lässt sich somit eine wärmeisolierende Unterteilung des Gehäuseinnenraums eines Siegelgeräts vornehmen. Hierdurch wird der Wärmetransport zwischen einem vorderen Bereich und einem hinteren Bereich eines Siegelgeräts reduziert oder weitestmöglich vermieden. So lässt sich beispielsweise eine Heizeinheit in dem vorderen Bereich anordnen und die hitzesensiblen funktionellen Komponenten, insbesondere eine Steuereinheit mit ihrer Steuerelektronik, aber auch die Antriebseinheit, in dem hinteren Bereich. Hierdurch wird eine unerwünschte und die Funktionstüchtigkeit und Lebensdauer der Steuereinheit beeinträchtigende Erwärmung der Steuereinheit vermieden. Der erfindungsgemäße Tragrahmen erlaubt es, zwei voneinander thermisch isolierte Bereiche in dem Gehäuseinnenraum zu schaffen. Dies ermöglicht auch eine Verringerung des Gehäusevolumens, da die Heizeinheit und die hitzesensiblen funktionellen Komponenten, insbesondere die Steuereinheit, aufgrund des sie thermisch voneinander trennenden Tragrahmens in engerer räumlicher Nähe zueinander angeordnet werden können. Auch wird ein geringeres Gehäusevolumen bzw. eine geringere Gehäuseoberfläche zur Wärmeaufnahme und den Wärmeabtransport benötigt. Mit dem erfindungsgemäßen Tragrahmen lässt sich somit ein Siegelgerät zur Verfügung stellen, dass vergleichsweise geringe Gehäuseabmessungen aufweist, aber dennoch kostengünstig herzustellen ist, ohne dass die Lebensdauer und die Funktionstüchtigkeit des Siegelgeräts hierdurch beeinträchtigt werden.

In einer Variante ist auf der Vorderseite des Tragrahmens ein Transportweg für zu versiegelnde Folien bzw. Folienteile, insbesondere Kunststofffolien, beispielsweise medizinische Sterilverpackungen, ausgebildet. Der Transportweg erstreckt sich entlang einer Längsrichtung des Tragrahmens und wird durch zwei einander gegenüberliegende Führungen gebildet, die sich senkrecht zur Hauptebene entlang der Längsrichtung des Tragrahmens erstrecken und einteilig mit dem Tragrahmen ausgeführt sind. Folienteile bzw. Folien, insbesondere Kunststofffolien, können so an einer Heizeinheit vorbei einer Siegeleinheit eines Siegelgeräts zugeführt werden. Durch die Ausbildung des Transportwegs als Teil des Tragrahmens wird die Anzahl der Bauteile eines Siegelgeräts reduziert. Des Weiteren wird insbesondere aufgrund der thermisch isolierenden Eigenschaften des Tragrahmens eine Erwärmung des Transportwegs vermindert, so dass zu versiegelnde Folien bzw. Folienteile nur im Bereich der Heizeinheit erwärmt werden. Eine unerwünschte Erwärmung von Folien bzw. Folienteilen durch einen aufgeheizten Transportweg und eine aufgeheizte Folienführung wird somit vermieden.

In einer Variante weist das mindestens eine Anbringungselement mindestens ein auf der Vorderseite des Tragrahmens angeordnetes Befestigungselement zur Befestigung einer Heizeinheit auf. Das mindestens eine Befestigungselement erlaubt es, eine Heizeinheit direkt an dem Tragrahmen zu befestigen. Das mindestens eine Befestigungselement ist auf der Vorderseite des Tragrahmens angeordnet, so dass eine an dem mindestens einen Befestigungselement befestigte Heizeinheit im vorderen Bereich eines Siegelgeräts angeordnet ist. Das mindestens eine Befestigungselement ist beispielsweise einteilig mit dem Tragrahmen ausgebildet. Zum Beispiel ist das mindestens eine Befestigungselement eine am Tragrahmen ausgebildete Säule, die sich insbesondere senkrecht zur Hauptebene erstreckt. Die Säule weist beispielsweise ein Innengewinde oder ein als metallisches Einlegeteil ausgeführtes Innengewinde zur Aufnahme einer Schraube auf, so dass eine Heizeinheit mit dem Tragrahmen verschraubt werden kann. Alternativ ist die Säule ohne Innengewinde ausgeführt, beispielsweise zur Verwendung mit selbstschneidenden Schrauben. In einer Variante weist der Tragrahmen mehrere Befestigungselemente zur Befestigung einer Heizeinheit am Tragrahmen auf. In einer Variante sind zwei Befestigungselemente für jedes Heizelement einer Heizeinheit vorgesehen. Beispielsweise weist eine Heizeinheit eines Siegelgeräts zwei Heizelement auf, die einander gegenüberliegend angeordnet sind, um die beiden miteinander zu versiegelnden Folienteile bzw. Folien, zu erwärmen, insbesondere gleichmäßig zu erwärmen. In einer Variante sind zwei Befestigungselemente zur Befestigung eines Heizelements einer Heizeinheit am Tragrahmen ausgebildet. Insbesondere weist der Tragrahmen vier Befestigungselemente zur Befestigung einer Heizeinheit am Tragrahmen auf. In einer Variante weist der Tragrahmen mehrere Befestigungselemente entlang des Transportwegs auf einander gegenüberliegenden Seiten des Transportwegs auf. Beispielsweise weist der Tragrahmen zwei Befestigungselemente oberhalb des Transportwegs und zwei Befestigungselemente unterhalb des Transportwegs auf.

In einer Variante weist das mindestens eine Anbringungselement mindestens ein auf der Rückseite des Tragrahmens angeordnetes Befestigungselement zur Befestigung einer Antriebseinheit, insbesondere eines Motors, auf. Alternativ oder zusätzlich weist das mindestens eine Anbringungselement mindestens eine auf der Rückseite des Tragrahmens angeordnete Aufnahme für eine Steuereinheit auf. Mittels des mindestens einen Befestigungselements zur Befestigung einer Antriebseinheit lässt sich eine Antriebseinheit am Tragrahmen befestigen, die bei Einbau in ein Siegelgerät im hinteren Bereich des Gehäuseinnenraums angeordnet ist. Mittels des mindestens einen Befestigungselements zur Befestigung einer Steuereinheit lässt sich eine Steuereinheit so an dem Tragrahmen befestigen, dass sie bei Einbau in ein Siegelgerät im hinteren Bereich des Gehäuseinnenraums angeordnet ist. Das mindestens eine Befestigungselement zur Befestigung einer Antriebseinheit und das mindestens eine Befestigungselement zur Befestigung einer Steuereinheit ist einteilig mit dem Tragrahmen ausgeführt. Beispielsweise ist das mindestens eine Befestigungselement zur Befestigung einer Antriebseinheit als sich im Wesentlichen senkrecht zur Hauptebene erstreckende Säule mit einem Innengewinde oder einem als metallisches Einlegeteil ausgeführten Innengewinde ausgeführt. In einer Variante sind drei Befestigungselemente zur Befestigung einer Antriebseinheit an der Rückseite des Tragrahmens ausgebildet. In einer Variante ist das mindestens eine Befestigungselement zur Befestigung der Steuereinheit eine Bohrung zum Verschrauben der Steuereinheit mit dem Tragrahmen. Zusätzlich oder alternativ weist das mindestens eine Anbringungselement eine Aufnahme für eine Steuereinheit an der Rückseite des Tragrahmens auf. Die Aufnahme wird in einer Variante durch Versteifungsrippen gebildet.

In einer Variante weist das mindestens eine Anbringungselement mindestens eine Aufnahme für ein Lager einer Transporteinheit zum Transport von zu versiegelnden Folien bzw. Folienteilen, insbesondere Kunststofffolien, auf. Beispielsweise umfasst die Transporteinheit, insbesondere zwei, Transportriemen, die gegenläufig entlang des Transportweges bewegt werden können. In einer Variante ist entsprechend eine erste Aufnahme für ein erstes Lager eines unteren Transportriemens in einem Anfangsbereich des Transportweges ausgebildet und eine zweite Aufnahme für ein zweites Lager des unteren Transportriemens in einem Endbereich des Transportweges ausgebildet. Dabei werden Anfangs- und Endbereich durch die Transportrichtung der zu versiegelnden Folien bzw. Folienteile bei Einbau des Tragrahmens in ein Siegelgerät bestimmt. Die erste und zweite Aufnahme sind beispielsweise unterhalb des Transportweges angeordnet. Zusätzlich ist in einer Variante eine dritte Aufnahme für ein erstes Lager eines oberen Transportriemens in einem Anfangsbereich des Transportweges ausgebildet und eine vierte Aufnahme für ein zweites Lager eines oberen Transportriemens in einem Endbereich des Transportweges ausgebildet. Die dritte und vierte Aufnahme sind beispielsweise oberhalb des Transportweges angeordnet. In einer Variante liegen die erste Aufnahme und die dritte Aufnahme sowie die zweite Aufnahme und die vierte Aufnahme auf unterschiedlichen Seiten des Transportwegs (unten bzw. oben) einander gegenüber. In einer Variante weist die mindestens eine Aufnahme für ein Lager einer Transporteinheit einen Befestigungspunkt für die Transporteinheit auf, an dem die Transporteinheit mit dem Tragrahmen verbunden, insbesondere verschraubt, werden kann. Zusätzlich weist der Tragrahmen in einer Variante mindestens ein Befestigungselement zur Befestigung der Transporteinheit am Tragrahmen auf. Dies ermöglicht eine zusätzliche Sicherung der Transporteinheit am Tragrahmen. Das Befestigungselement zur Befestigung am Tragrahmen ist beispielsweise an der Vorderseite des Tragrahmens angeordnet. Beispielsweise ist das Befestigungselement einteilig mit den Tragrahmen ausgebildet. Dies ermöglicht eine Anordnung der Transporteinheit im vorderen Gehäusebereich bei Einbau des Tragrahmens in ein Siegelgerät. Insbesondere ist die mindestens eine Aufnahme für ein Lager einer Transporteinheit so angeordnet, dass eine in der Aufnahme gelagerte Transporteinheit Folien bzw. Folienteile entlang des Transportwegs bewegen kann.

In einer Variante weist das mindestens eine Anbringungselement mindestens eine Aufnahme für ein Lager einer Siegeleinheit auf. Die Siegeleinheit ist beispielsweise eine Einheit zur Druckbeaufschlagung von zu versiegelnden Folien bzw. Folienteilen, insbesondere durch zwei auf verschiedenen Seiten des Transportwegs angeordnete Druckwalzen. Die mindestens eine Aufnahme für ein Lager einer Siegeleinheit ist beispielsweise ein Lager für eine Druckwalze einer Siegeleinheit. In einer Variante weist der Tragrahmen zwei einander entlang des Transportweges gegenüberliegende Aufnahmen für ein erstes und ein zweites Lager einer Siegeleinheit auf. Beispielsweise sind die beiden Aufnahmen für ein erstes und ein zweites Lager im Endbereich des Transportweges, insbesondere in Transportrichtung vor dem Transportlager, angeordnet. In einer Variante weist die mindestens eine Aufnahme für ein Lager einer Siegeleinheit einen Befestigungspunkt für die Siegeleinheit auf, an dem die Siegeleinheit mit dem Tragrahmen verbunden, insbesondere verschraubt, werden kann.

In einer Variante weist der Tragrahmen ein thermisch isolierendes Material, insbesondere auf seiner Oberfläche, auf. Alternativ ist der Tragrahmen aus einem thermisch isolierenden Material gefertigt. In einer Variante weist der Tragrahmen mindestens ein Einlegteil auf, das mit einem thermisch isolierenden Material umspritzt ist. Beispielsweise weist der Tragrahmen einen oder mehrere Metallträger zur Stabilisierung als Einlegteil und/oder ein oder mehrere Innengewinde von Befestigungselementen als Einlegteil auf. In einer alternativen Varianten weist der Tragrahmen eine thermisch isolierende Beschichtung, insbesondere eine Beschichtung aus einem thermisch isolierenden Material, z.B. mit einem thermisch isolierenden Lack oder eine Kunststoffbeschichtung wie beispielsweise eine Polyamid-Beschichtung, auf. Das thermisch isolierende Material ist beispielsweise ein Kunststoff, insbesondere ein thermoplastischer Kunststoff, ein duroplastischer Kunststoff oder ein Elastomer. Diese Kunststoffe ermöglichen die Herstellung des Tragrahmens mittels Spritzgießen. Das thermisch isolierende Material weist in einer Variante, insbesondere bei einem mittels Spritzgießens hergestellten Tragrahmens, zusätzlich eine Glasfaserverstärkung auf. Dies erhöht die mechanische Festigkeit und die Formstabilität. In einer alternativen Variante ist das thermisch isolierende Material ein gesintertes Material, beispielsweise ein Metallschaum oder eine Keramik.

Beispielsweise ist das thermisch isolierende Material ein Polyphenylensulfid, PPS, ein Polyetherketon, PEK, Polyetheretherketon, PEEK, ein Polyamid, PA, ein Polyoxymethylen, POM, ein Polysulfon, PSU, ein Polyethersulfon, PES, ein Polyethersulfon Ultrasulfon, PPSU, ein Polyimid, PI, ein Polyetherimid, PEI, ein Polyamidimid, PAI, und/oder ein Polyvinylidendifluorid, PVDF, oder eine Kombination, beispielsweise ein Gemisch, derselben. In einer Variante ist der Tragrahmen aus PPS gefertigt, d.h. der Tragrahmen besteht aus PPS.

In einer Variante weist der Tragrahmen auf der Vorderseite und/oder auf der Rückseite der Hauptebene Versteifungsrippen auf. Die Versteifungsrippen verleihen dem Tragrahmen die notwendige Stabilität. In einer Variante wird durch mehrere Versteifungsrippen auf der Rückseite der Hauptebene eine Aufnahme für eine Steuereinheit eines Siegelgerätes geschaffen. Dies erlaubt eine sichere Lagerung einer Steuereinheit. Der Tragrahmen weist alternativ oder zusätzlich mindestens eine Öffnung zur Kabeldurchführung von der Vorderseite zur Rückseite durch die Hauptebene auf. Alternativ oder zusätzlich weist der Tragrahmen beispielsweise einen Befestigungspunkt zur Befestigung des Tragrahmens an einem Gehäuse eines Siegelgeräts auf. Beispielsweise ist mindestens ein Befestigungspunkt vorgesehen, um den Tragrahmen am Gehäuse, insbesondere seitlich und/oder an der Oberseite, zu verschrauben. Hiermit lässt sich der Tragrahmen in ein Gehäuse eines Siegelgeräts einbauen und an diesem befestigen. In einer Variante weist der Tragrahmen mindestens einen Standfuß auf. Dieser stabilisiert den Tragrahmen im Gehäuse alternativ oder zusätzlich.

In einer Variante ist der Tragrahmen einteilig ausgeführt. Hierdurch wird die Anzahl an Bauteilen für ein Siegelgerät reduziert und damit die Fertigung eines Siegelgeräts vereinfacht. Außerdem wird die Passgenauigkeit erhöht. Der Tragrahmen ist beispielsweise als ein Spritzgussteil ausgeführt.

In einer Variante besteht der Tragrahmen aus zwei Bauteilen, die miteinander verbunden sind. Insbesondere bei einer Fertigung aus Kunststoff wird so die Formstabilität des Tragrahmens erhöht. Die beiden Bauteile sind reversibel oder irreversibel miteinander verbunden. Beispielsweise sind die beiden Bauteile miteinander verschraubt oder durch Kleben, Kunststoffschweißen, Schnappverbindung oder Pressverbindung irreversibel miteinander verbunden.

In einer Variante ist der Tragrahmen entlang der Längsrichtung in ein oberes Bauteil und ein unteres Bauteil geteilt, wobei eine sich entlang der Längsrichtung erstreckende Unterseite des oberen Bauteils eine senkrecht zur Hauptebene ausgebildete obere Führung auf der Vorderseite des Tragrahmens bildet und eine sich entlang der Längsrichtung erstreckende Oberseite des unteren Bauteils eine senkrecht zur Hauptebene ausgebildete untere Führung auf der Vorderseite des Tragrahmens bildet, wobei die obere und die untere Führung zusammenwirken, um einen Transportweg für zu versiegelnde Folienteile zu bilden. Durch die Aufteilung in ein oberes und ein unteres Bauteil wird die Ausdehnung der Teile des Tragrahmens in senkrecht zur Hauptebene reduziert und so die Formstabilität der Bauteile erhöht.

In einer alternativen Variante besteht der Tragrahmen aus mehreren Bauteilen, insbesondere aus mehr als zwei Bauteilen.

Ein weiterer Gegenstand der Erfindung ist ein Siegelgerät zur Versiegelung von Kunststofffolien. Das Siegelgerät weist ein Gehäuse auf. Innerhalb des Gehäuses, d.h. in einem Gehäuseinnenraum, ist ein Tragrahmen angeordnet. Der Tragrahmen weist eine Hauptebene mit einer Vorderseite und einer Rückseite auf und teilt den Gehäuseinnenraum in einen die Vorderseite beinhaltenden vorderen Bereich und einen die Rückseite beinhaltenden hinteren Bereich. In dem vorderen Bereich sind eine Heizeinheit, eine Transporteinheit zum Transport zu versiegelnder Folien bzw. Folienteile, insbesondere Kunststofffolien, beispielsweise medizinische Sterilverpackungen, und eine Siegeleinheit angeordnet. In dem hinteren Bereich ist eine Steuereinheit angeordnet. Das Siegelgerät der vorliegenden Erfindung zeichnet sich dadurch aus, dass der Tragrahmen ein Tragrahmen nach einem der Ansprüche 1 bis 12 ist.

Hiermit wird ein Siegelgerät zur Verfügung gestellt, dessen Abmessungen vergleichsweise gering gewählt werden können, ohne dass es hierdurch zu einer ungewünschten Überhitzung der hitzesensiblen Steuereinheit durch die Heizeinheit kommt. Beispielsweise hat das Siegelgerät eine Länge von 40 cm oder weniger, und/oder eine Tiefe von 20 cm oder weniger, und/oder eine Höhe von 16 cm oder weniger. Aber auch größere Abmessungen können die Verwendung eines thermisch isolierenden Tragrahmens notwendig machen. Auch kann aufgrund der abschirmenden Wirkung des Tragrahmens auf die Verwendung kostenintensiver elektronischer Bauteile mit höheren thermischen Belastungsgrenzen verzichtet werden, ohne dass durch eine Erwärmung der hitzesensiblen Elemente der Steuereinheit durch die Heizeinheit die Lebensdauer des Siegelgeräts verkürzt oder seine Funktionstüchtigkeit beeinträchtigt würde.

In einer Variante ist die Heizeinheit an mindestens einem auf der Vorderseite des Tragrahmens angeordneten Befestigungselement befestigt, mindestens ein Lager der Transporteinheit in einer Aufnahme des Tragrahmens gelagert und mindestens ein Lager der Siegeleinheit in einer Aufnahme des Tragrahmens gelagert. Zusätzlich ist in einer Variante im hinteren Bereich eine Antriebseinheit, insbesondere zum Antrieb der Transporteinheit und/oder der Siegeleinheit, angeordnet. Die Antriebseinheit ist zum Beispiel an mindestens einem auf der Rückseite des Tragrahmens angeordneten Befestigungselement befestigt. Alternativ ist die Antriebseinheit am Gehäuse befestigt. Es ist auch denkbar, dass die Antriebseinheit im vorderen Bereich angeordnet ist. In einer Variante ist die Steuereinheit in einer durch Versteifungsrippen gebildeten Aufnahme auf der Rückseite des Tragrahmens angeordnet.

Ein weiterer Gegenstand der vorliegenden Erfindung ist ein Herstellungsverfahren für einen Tragrahmen für ein Siegelgerät nach einem der Ansprüche 1 bis 12. Das Verfahren zeichnet sich dadurch aus, dass der Tragrahmen durch ein Spritzgussverfahren hergestellt wird. Die Herstellung des Tragrahmens wird hierdurch vereinfacht und ist vergleichsweise kostengünstig möglich. Insbesondere die einteilige und die zweiteilige Ausführung des Tragrahmens erlauben eine schnelle Fertigung sowie einen schnellen, einfachen und passgenauen Einbau des Tragrahmens und der an ihm angeordneten funktionellen Komponenten in ein Gehäuse eines Siegelgeräts.

In einer alternativen Variante wird der Tragrahmen durch Fräsen, Sintern, Gießen oder mittels 3D-Druck hergestellt.

Sämtliche Varianten und Ausgestaltungen des Tragrahmens können in beliebiger Weise miteinander kombiniert werden und können entweder einzeln oder in beliebiger Kombination auf das Siegelgerät übertragen werden. In gleicher Weise können sämtliche Varianten und Ausgestaltungen des Siegelgeräts in beliebiger Weise miteinander kombiniert werden und einzeln oder in beliebiger Kombination auf den Tragrahmen übertragen werden.

Einzelheiten von Aspekten der vorliegend beanspruchten Erfindung werden nachfolgend anhand von Ausführungsbeispielen und Figuren näher erläutert. Es zeigen:
- Figur 1: eine Frontansicht eines Tragrahmens gemäß einer Ausführungsform der vorliegenden Erfindung;
- Figur 2: eine Rückansicht eines Tragrahmens gemäß der Ausführungsform der Figur 1;
- Figur 3: eine Frontansicht eines Tragrahmens gemäß einer alternativen Ausführungsform der vorliegenden Erfindung;
- Figur 4: eine Rückansicht eines Tragrahmens gemäß der Ausführungsform der Figur 3;
- Figur 5: eine Darstellung eines Siegelgeräts gemäß einer Ausführungsform der vorliegenden Erfindung.

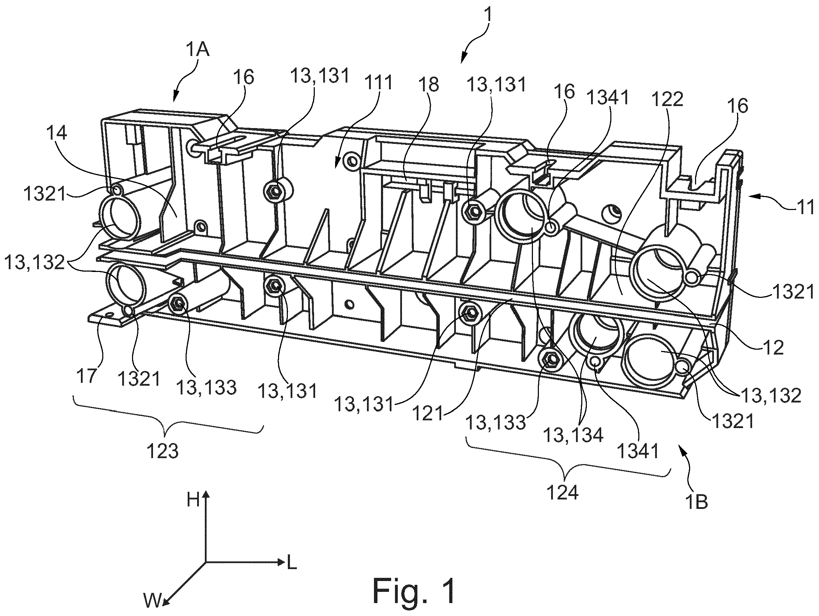

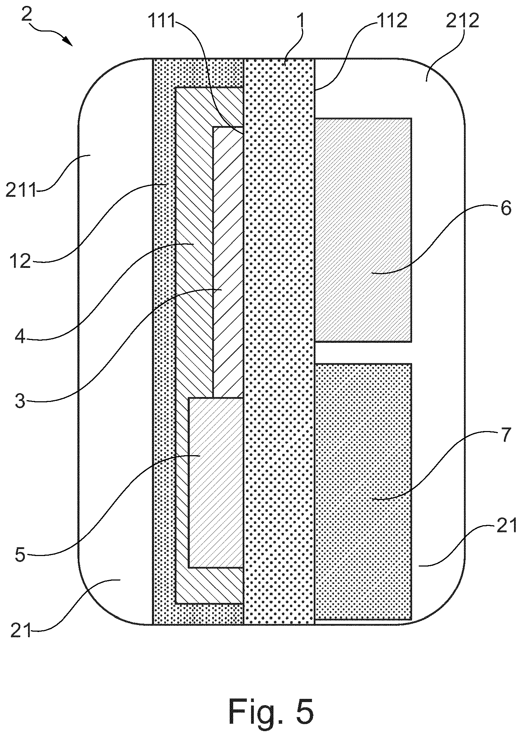

**Figur** 1 illustriert eine Frontansicht eines Tragrahmens 1 gemäß einer Ausführungsform. Der Tragrahmen 1 weist eine Hauptebene 11 auf, deren Vorderseite 111 in der Frontansicht zu sehen ist. Der Tragrahmen 1 besteht aus zwei Bauteilen, einem oberen Bauteil 1A und einem unteren Bauteil 1B. Der Tragrahmen 1 erstreckt sich entlang einer Längsrichtung L und weist eine Höhe H auf. Dabei entspricht die Höhe H in einer Variante im Wesentlichen der Höhe des Gehäuses eines Siegelgeräts 2. Beim Einbau in ein Siegelgerät 2 teilt der Tragrahmen 1 einen Gehäuseinnenraum 21 in einen vorderen Bereich 211, dem die hier gezeigte Vorderseite 111 des Tragrahmen 1 zugewandt ist, und einen hinteren Bereich 212, vgl. **Figur 5****.** Auf der Vorderseite 111 ist ein Transportweg 12 für zu versiegelnde Folien bzw. Folienteile ausgebildet. Zu versiegelnde Folien bzw. Folienteile werden mittels einer Transporteinheit 4 entlang des Transportwegs 12 an einer Heizeinheit 3 vorbei einer Siegeleinheit 5 zugeführt, die die eigentliche Versiegelung der Folien bzw. Folienteile vornimmt. Der Transportweg 12 erstreckt sich entlang der Längsrichtung L des Tragrahmens 1. Der Transportweg 12 wird durch zwei einander gegenüberliegende Führungen 121, 122 gebildet. Die Führungen 121, 122 erstrecken sich senkrecht zur Hauptebene 11 entlang der Längsrichtung L des Tragrahmens 1, in der durch die Tiefenachse W und Längsachse L definierten Ebene. Der Transportweg 12 ist als Teil des Tragrahmens 1 ausgebildet. In der vorliegend dargestellten Variante eines aus zwei Bauteilen 1A, 1B bestehenden Tragrahmens 1, bildet eine sich entlang der Längsrichtung L erstreckende Unterseite des oberen Bauteils 1A eine obere Führung 122 auf der Vorderseite 111 des Tragrahmens 1 und eine sich entlang der Längsrichtung erstreckende Oberseite des unteren Bauteils 1B eine untere Führung 121 auf der Vorderseite 111 des Tragrahmens 1. Die beiden Führungen 121, 122 wirken zusammen, um den Transportweg 12 zu bilden. Oberes und unteres Bauteil 1A, 1B sind miteinander, beispielsweise reversibel, verbunden. Das obere und das untere Bauteil 1A, 1B sind beispielsweise miteinander verschraubt. Der Tragrahmen 1 weist mindestens eine Anbringungselement 13 zur Anbringung einer funktionellen Komponente eines Siegelgeräts 2 auf. Funktionelle Komponenten eines Siegelgeräts 2 sind beispielsweise eine Heizeinheit 3 zur Erwärmung zu versiegelnder Folien bzw. Folienteile, eine Transporteinheit 4 zum Transport von zu versiegelnden Folien bzw. Folienteile entlang eines Transportwegs 12 an einer Heizeinheit 3 vorbei zu einer Siegeleinheit 5, sowie eine Siegeleinheit 5, die beispielsweise durch Druckbeaufschlagung die erwärmten Folien bzw. Folienteile miteinander versiegelt. Ferner sind auch eine Steuereinheit 6 zur Ansteuerung des Siegelgeräts 2 und eine Antriebseinheit 7, insbesondere ein Motor, zum Antrieb der Transporteinheit 4 und/oder der Siegeleinheit 5, Beispiele für funktionelle Komponenten eines Siegelgeräts 2. In der dargestellten Ausführungsform weist der Tragrahmen 1 mehrere Anbringungselemente 13 auf. Die Anbringungselemente 13 sind einteilig mit dem Tragrahmen 1 ausgeführt. Der Tragrahmen 1 weist auf seiner Vorderseite 111 vier als Befestigungselemente 131 für eine Heizeinheit 3 ausgeführte Anbringungselemente 13 auf. Dabei sind jeweils zwei Befestigungselemente 131 für eine Heizeinheit 3 einander gegenüberliegend oberhalb bzw. unterhalb des Transportwegs 12 ausgebildet. Somit lässt sich ein erstes Heizelement einer Heizeinheit 3 oberhalb des Transportwegs 12 befestigen und ein zweites Heizelement einer Heizeinheit 3 unterhalb des Transportwegs 12 befestigen. Entlang des Transportwegs 12 transportierte Folien bzw. Folienteile können so für die Versiegelung erwärmt werden. Die Befestigungselemente 131 sind beispielweise als sich senkrecht zur Hauptebene 11 erstreckende Säulen ausgebildet. Die Befestigungselement 131 weisen zum Beispiel ein Innengewinde oder ein als metallisches Einlegeteil ausgeführtes Innengewinde auf. Der Tragrahmen 1 weist auf seiner Vorderseite 111 ferner vier als Aufnahmen 132 für ein Lager einer Transporteinheit 4 zum Transport von zu versiegelnden Folien bzw. Folienteilen ausgeführte Anbringungselemente 13 auf. Dabei sind jeweils zwei Aufnahmen 132 für ein Lager einer Transporteinheit 4 einander gegenüberliegend oberhalb bzw. unterhalb des Transportweges 12, insbesondere in dessen Anfangs- und Endbereich 123, 124, ausgebildet. Eine Transporteinheit 4 weist beispielsweise zwei Antriebsriemen auf, deren Lager in den Aufnahmen 132 so gelagert werden können, dass die beiden Antriebsriemen in gegenläufiger Richtung entlang des Transportwegs 12 bewegt werden können. Dabei lassen sich zwei Lager eines oberen Antriebsriemens in den beiden oberhalb des Transportwegs 12 ausgebildeten Aufnahmen 132 und zwei Lager eines unteren Antriebsriemens in den beiden unterhalb des Transportwegs 12 ausgebildeten Aufnahmen 132 lagern. Zusätzlich sind im dargestellten Beispiel zwei als Befestigungselemente 133 für die Transporteinheit 4 ausgeführt Anbringungselemente 13 vorgesehen. Mit diesen lässt sich die Transporteinheit 4 an dem Tragrahmen 1, beispielsweise reversibel, befestigen. Außerdem sind an den Aufnahmen 132 Befestigungspunkte 1321 für die Befestigung der Transporteinheit 4 am Tragrahmen 1 vorgesehen. Auf der Vorderseite 111 des Tragrahmen 1 sind weiter zwei als Aufnahmen 134 für ein Lager einer Siegeleinheit 5 ausgeführte Anbringungselemente 13 ausgebildet. Beispielsweise weist die Siegeleinheit 5 eine erste und eine zweite Druckwalze auf, die im Endbereich 124 des Transportwegs 12 Druck auf die erwärmten und zu versiegelnden Folien bzw. Folienteile ausüben, um diese miteinander zu versiegeln. Beispielsweise ist eine erste Aufnahme 134 für eine Lager einer Siegeleinheit 5 im Endbereich 124 des Transportwegs 12 oberhalb des Transportwegs 12 angeordnet und eine zweite Aufnahme 134 im Endbereich 124 des Transportwegs 12 unterhalb desselben angeordnet. Mit diesen lässt sich die Transporteinheit 4 an dem Tragrahmen 1, beispielsweise reversibel, befestigen. Außerdem sind an den Aufnahmen 134 Befestigungspunkte 1341 für die Befestigung der Siegeleinheit 5 am Tragrahmen 1 vorgesehen.

Der Tragrahmen 1 ist ein thermisch isolierender Tragrahmen 1, mithin ein thermisch isolierendes Konstruktionselement. Insbesondere weist der Tragrahmen 1 ein thermisch isolierendes Material auf seiner Oberfläche auf, beispielsweise als Beschichtung auf seiner gesamten oder auf Teilen seiner Oberfläche, insbesondere auf der Vorder- und/oder Rückseite 121, 122, oder der Tragrahmen 1 ist aus einem thermisch isolierenden Material gefertigt, d.h. er besteht aus einem thermisch isolierenden Material. In der dargestellten Variante ist der Tragrahmen 1 aus einem thermisch isolierenden Material gefertigt. Der Tragrahmen 1 schirmt somit den hinteren Bereich 212 eines Gehäuseinnenraums 21 eines Siegelgeräts 2 gegenüber dem vorderen Bereich 211 thermisch ab. Der Tragrahmen 1 reduziert oder verhindert den Wärmetransport von dem die Heizeinheit 3 enthaltenden vorderen Bereich 211 des Gehäuseinnenraums 21 in den die hitzesensible Steuereinheit 6 enthaltenden hinteren Bereich 212 des Gehäuseinnenraums 21. Ein thermisch isolierendes Material ist ein Material mit einer geringen Wärmeleitfähigkeit, mit einer Wärmeleitfähigkeit von λ ≤ 7 W/(m. K), insbesondere λ ≤ 1 W/(m. K). Thermisch isolierende Materialien umfassen Kunststoffe, insbesondere thermoplastische und/oder duroplastische Kunststoffe und/oder Elastomere, wie beispielsweise Polyphenylensulfide, PPS, Polyetherketone, PEK, Polyetheretherketone, PEEK, Polyamide, PA, Polyoxymethylene, POM, Polysulfone, PSU, Polyethersulfon, PES, Polyethersulfon-Ultrasulfone, PPSU, Polyimide, PI, Polyetherimide, PEI, Polyamidimide, PAI, oder Polyvinylidendifluoride, PVDF, sowie jegliche Kombinationen derselben. Thermisch isolierende Materialien umfassen aber auch gesinterte Materialien wie beispielsweise ein Metallschaum oder eine Keramik. Um die nötige Stabilität zu erreichen, kann der Tragrahmen 1 Einlegteile, beispielsweise Metallträger, aufweisen, die mit einem thermisch isolierenden Material umspritzt sind.

Im dargestellten Beispiel ist der Tragrahmen 1 aus Kunststoff, insbesondere PPS, ausgeführt. Dies ermöglicht eine Fertigung des Tragrahmens 1 im Spritzgussverfahren. Die zweiteilige Ausführung mit einem oberen Bauteil 1A und einem unteren Bauteil 1B garantiert die notwendige Formstabilität. Mehrere auf der Vorderseite 111 ausgebildete Versteigungsrippen 14 geben zusätzliche Stabilität. An einer Außenkante des Tragrahmens 1, insbesondere dessen oberen Bauteils 1A, sind Befestigungspunkte 16 zur Befestigung des Tragrahmens 1 an einem Gehäuse eines Siegelgeräts 2 vorgesehen. Diese sind beispielsweise wie dargestellt an der oberen oder den seitlichen Außenkanten des Tragrahmens 1 vorgesehen. Ein Standfuß 17 verleiht zusätzliche Standfestigkeit im Gehäuseinnenraum. Eine oder mehrere, beispielsweise zwei, Kabeldurchführungen 18 ermöglicht die Durchführung von Kabeln von den an der Vorderseite 111 befestigten funktionellen Komponenten zu den an der Rückseite 112 befestigten funktionellen Komponenten.

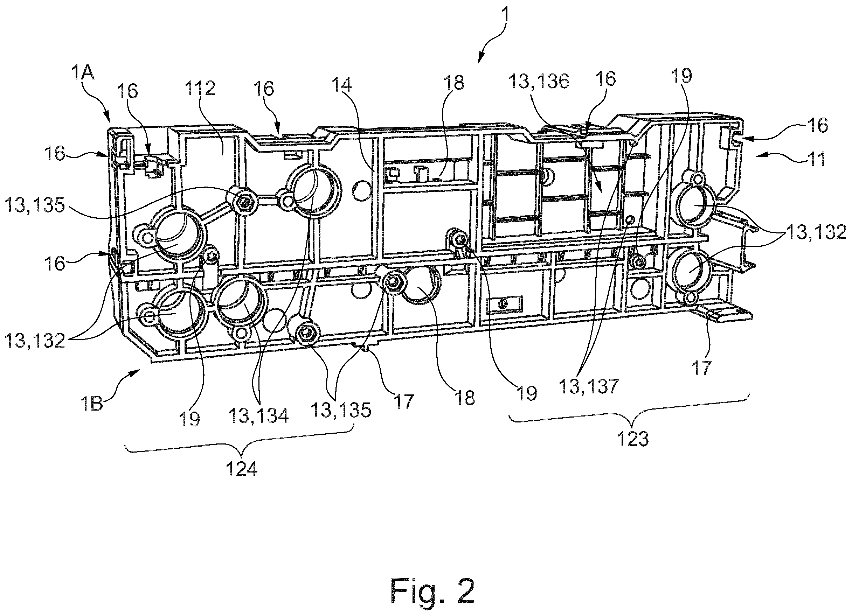

**Figur** 2 zeigt die Rückansicht der in Figur 1 vorgestellten Ausführungsvariante des Tragrahmens 1. Die Rückseite 112 des Tragrahmen 1 ist beim Einbau einem hinteren Bereich 212 eines Gehäuseinnenraums 21 eines Siegelgeräts 2 zugewandt. Der Tragrahmen 1 weist auf der Rückseite 112 mehrere Anbringungselemente 13 auf. Diese sind einteilig mit dem Tragrahmen 1 ausgeführt. In der dargestellten Variante weist der Tragrahmen 1 auf der Rückseite 112 mehrere, insbesondere drei, als Befestigungselemente 135 zur Befestigung einer Antriebseinheit 7, insbesondere eines Motors für die Transporteinheit 4 und/oder die Siegeleinheit 5, ausgeführte Anbringungselemente 13 auf. Die Befestigungselemente 135 zur Befestigung der Antriebseinheit 7 sind beispielsweise als sich senkrecht zur Hauptebene erstreckende Säulen ausgeführt. Die Säulen sind beispielsweise mit einem Innengewinde versehen oder weisen ein metallisches Innengewinde als Einlegteil auf. Somit lässt sich die Antriebseinheit 7 mit dem Tragrahmen 1 auf dessen Rückseite 112 verschrauben. Der Tragrahmen 1 weist ebenfalls ein als Aufnahme 136 für eine Steuereinheit 6 eines Siegelgeräts 2 ausgeführtes Anbringungselement 13 auf. Die Aufnahme 136 für eine Steuereinheit 6 wird beispielsweise durch mehrere auf der Rückseite 112 des Tragrahmens 1 ausgebildete Versteifungsrippen 14 gebildet. Mittels als Bohrungen ausgeführten Befestigungselementen 137 zur Befestigung einer Steuereinheit 6 in der Rückseite 112 des Tragrahmens 1 lässt sich die Steuereinheit 6 zusätzlich mit dem Tragrahmen 1 verschrauben. Auf der Rückseite 112 des Tragrahmens 1 sind mehrere, beispielsweise drei, Verbindungspunkte 19 zur Verbindung des oberen Bauteils 1A mit dem unteren Bauteil 1B angeordnet. Beispielsweise wird das obere Bauteil 1A mittels Verschraubung an dem unteren Bauteil 1B befestigt. Auf der Rückseite 112 ist ein weiterer Standfuß 17 vorgesehen, mit dem sich der Tragrahmen 1 am Gehäuseboden eines Siegelgeräts 2 befestigen lässt.

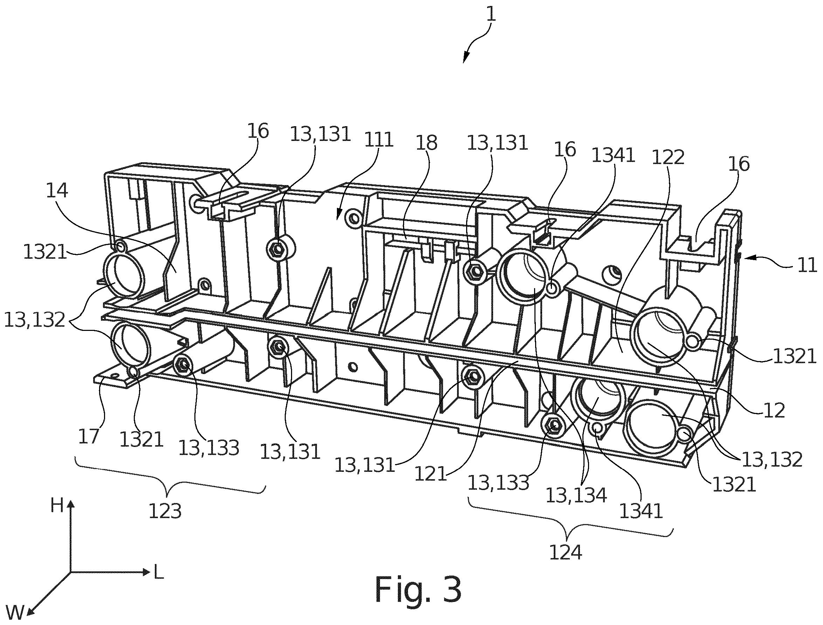

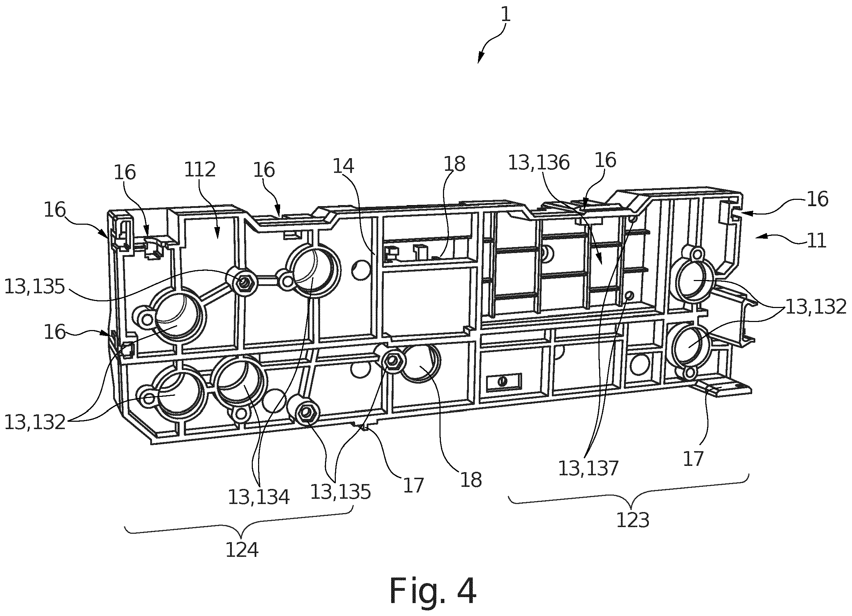

**Figur** 3 zeigt eine Frontansicht einer weiteren Ausführungsform des Tragrahmens 1. Der in der Figur 3 dargestellte Tragrahmen 1 unterscheidet sich von der in den Figuren 1 und 2 dargestellten Ausführungsform des Tragrahmens 1 in der Anzahl von Bauteilen, aus denen der Tragrahmen 1 besteht. Im Folgenden werden nur die Unterschiede zur in Bezug auf die Figuren 1 und 2 beschriebenen Ausführungsform dargelegt. Alle übrigen Merkmale stimmen mit denen in Bezug auf die Ausführungsform der Figuren 1 und 2 beschriebenen Merkmale überein. Der Tragrahmen 1 ist einteilig ausgeführt. An der Vorderseite 111 ist ein Transportweg 12 ausgebildet, der sich entlang einer Längsrichtung L des Tragrahmens 1 erstreckt und der durch zwei einander gegenüberliegende Führungen 121, 122 gebildet wird. Die obere und untere Führung 121, 122 erstrecken sich jeweils senkrecht zur Hauptebene 11 entlang der Längsrichtung L des Tragrahmens 1. Sie werden somit durch zwei einteilig mit dem Tragrahmen 1 ausgebildete, sich in der durch die Längsrichtung und die Tiefe des Tragrahmens 1 definierten Ebene erstreckende, Platten gebildet. Wie sich der **Figur 4** entnehmen lässt, entfallen bei der einteiligen Ausführungsform des Tragrahmens 1 die Verbindungspunkte 19. Mit dem einteiligen Tragrahmen 1 wird somit eine besonders einfache Konstruktion des Tragrahmens 1 zur Verfügung gestellt.

**Figur 5** zeigt eine Siegelgerät 2 gemäß einer Ausführungsform der vorliegenden Erfindung. Das Siegelgerät 2 weist ein Gehäuse auf, in dessen Innenraum 21 ein Tragrahmen 1 angeordnet ist. Der Tragrahmen 1 teilt den Gehäuseinnenraum 21 in einen vorderen Bereich 211 und in einen hinteren Bereich 212. Der vordere Bereich 211 beinhaltet die Vorderseite 111 des Tragrahmens 1, der hintere Bereich 212 die Rückseite 112 des Tragrahmens 1. Entsprechend sind auf der Vorderseite 111 des Tragrahmens 1 befestigten funktionelle Komponenten des Siegelgeräts 2 im vorderen Bereich 211 des Gehäuseinnenraums 21 angeordnet und die auf der Rückseite 112 des Tragrahmens 1 befestigte funktionelle Komponenten des Siegelgeräts 2 im hinteren Bereich 212 des Gehäuseinnenraums 21. Ausführungsformen des Tragrahmens 1 wurden beispielsweise in den Figuren 1 bis 4 dargestellt und erläutert. Im vorderen Bereich 211 des Gehäuseinnenraums 21 sind eine Heizeinheit 3, eine Transporteinheit 4 und eine Siegeleinheit 5 angeordnet. Die Heizeinheit 3 ist an mindestens einem Befestigungselement 131 zur Befestigung einer Heizeinheit 3 mit dem Tragrahmen 1 auf dessen Vorderseite 111 verbunden. Beispielsweise ist die Heizeinheit 3 am Befestigungselement 131 mit dem Tragrahmen 1 verschraubt. Ein erstes Heizelement der Heizeinheit 3 ist beispielsweise an zwei Befestigungselementen 131 des Tragrahmens 1 oberhalb des Transportwegs 12 befestigt, insbesondere verschraubt. Ein zweites Heizelement der Heizeinheit 3 ist beispielsweise an zwei Befestigungselementen 131 unterhalb des Transportwegs 12 am Tragrahmen 1 befestigt, insbesondere verschraubt. So ist entlang des Transportwegs 12 eine Erwärmung der zu versiegelnden Folien bzw. Folienteile von oben und unten möglich. Eine Transporteinheit 4 ist in den Aufnahmen 132 für ein Lager einer Transporteinheit 4 eines Siegelgeräts 2 gelagert und zusätzlich mit dem Tragrahmen 1 in den Aufnahmen 132 zugehörigen Befestigungspunkten 1321 verbunden. Beispielsweise ist je ein Lager eines oberen Antriebsriemens der Transporteinheit 4 in einem von zwei oberhalb des Transportwegs 12 angeordneten Aufnahmen 132 gelagert und die Transporteinheit 4 an deren Befestigungspunkten 1321 mit dem Tragrahmen 1 verbunden, insbesondere verschraubt. Entsprechend ist je ein Lager eines unteren Antriebsriemens der Transporteinheit 4 in einem von zwei unterhalb des Transportwegs 12, insbesondere den oberhalb des Transportwegs angeordneten Aufnahmen 132 gegenüberliegenden, Aufnahmen 132 gelagert. Die Transporteinheit 4 ist an deren Befestigungspunkten 1321 mit dem Tragrahmen 1 verbunden, insbesondere verschraubt. Die Transporteinheit 4 ist zusätzlich an Befestigungselementen 133 für die Transporteinheit 4 mit dem Tragrahmen 1 verbunden, insbesondere verschraubt. Die Siegeleinheit 5 weist beispielsweise zwei Druckwalzen auf. Die Lager der Druckwalzen sind jeweils in einer Aufnahme 134 für eine Lager einer Siegeleinheit 5 gelagert und zusätzlich in den zugehörigen Befestigungspunkten 1341 mit dem Tragrahmen 1 verbunden. Im hinteren Bereich 212 des Gehäuseinnenraums 21 sind eine Steuereinheit 6 und eine Antriebseinheit 7 angeordnet. Die Steuereinheit 6 ist in einer auf der Rückseite 112 des Tragrahmens 1 ausgebildete Aufnahme 136 für eine Steuereinheit 6 gelagert und zusätzlich als Bohrungen ausgeführten Befestigungselementen 137 zur Befestigung einer Steuereinheit 6 mit dem Tragrahmen 1 verbunden, insbesondere verschraubt. Die Antriebseinheit 7 ist an Befestigungselementen 135 für eine Antriebseinheit 7 mit dem Tragrahmen 1 verbunden, insbesondere verschraubt. Der thermisch isolierende Tragrahmen 1 schirmt den hinteren Bereich 212 von dem sich im Betrieb des Siegelgeräts 2 stark erwärmenden vorderen Bereich 211 des Gehäuseinnenraums 21 thermisch ab. Ein Wärmetransport von dem durch die Heizeinheit 3 erhitzten vorderen Bereich 211 in den die hitzesensiblen Komponenten, insbesondere die Steuereinheit 6, beinhaltenden hinteren Bereich 212 wird somit reduziert oder sogar unterbunden. Hierdurch werden vergleichsweise geringe Geräteabmessungen ermöglicht, ohne dass die Verwendung kostenintensiver elektronischer Bauteile mit höheren Temperaturbelastungsgrenzen notwendig wäre oder die Funktionstüchtigkeit oder Lebensdauer des Siegelgeräts negativ beeinträchtigt würden.

### Bezugszeichenliste

- 1: Tragrahmen
- 11: Hauptebene
- 111: Vorderseite
- 112: Rückseite
- 12: Transportweg
- 121: obere Führung
- 122: untere Führung
- 13: Anbringungselement
- 131: Befestigungselement Heizeinheit
- 132: Lageraufnahme Transporteinheit
- 1321: Befestigungspunkt Lageraufnahme Transporteinheit
- 133: Befestigungselement Transporteinheit
- 134: Lageraufnahme Siegeleinheit
- 1341: Befestigungspunkt Lageraufnahme Siegeleinheit
- 135: Befestigungselement Antriebseinheit
- 136: Aufnahme Steuereinheit
- 137: Befestigungselement Steuereinheit (Bohrung)
- 14: Versteifungsrippe
- 16: Befestigungspunkt Tragrahmen
- 17: Standfuß
- 18: Öffnung zur Kabeldurchführung
- 19: Verbindungspunkte oberes und unteres Bauteil
- 1A: oberes Bauteil Tragrahmen
- 1B: unteres Bauteil Tragrahmen
- 2: Siegelgerät
- 21: Gehäuseinnenraum
- 211: vorderer Bereich
- 212: hinterer Bereich
- 3: Heizeinheit
- 4: Transporteinheit
- 5: Siegeleinheit
- 6: Steuereinheit
- 7: Antriebseinheit

## Patentansprüche

1. Tragrahmen (1) für ein Siegelgerät (2) zur Versiegelung von Folien, wobei der Tragrahmen (1) eine Hauptebene (11) mit einer Vorderseite (111) und einer Rückseite (112) aufweist, die beim Einbau in ein Siegelgerät (2) einen Gehäuseinnenraum (21) in einen, die Vorderseite (111) beinhaltenden vorderen Bereich (211) und einen die Rückseite (112) beinhaltenden hinteren Bereich (212) teilt, wobei der Tragrahmen (1) mindestens ein Anbringungselement (13) zur Anbringung einer funktionellen Komponente eines Siegelgeräts (2) aufweist, **dadurch gekennzeichnet, dass** der Tragrahmen (1) ein thermisch isolierender Tragrahmen ist, wobei der Tragrahmen (1) ein thermisch isolierendes Material aufweist, wobei das thermisch isolierende Material eine Wärmeleitfähigkeit λ von 7 W/(m·K) oder weniger aufweist.

2. Tragrahmen (1) nach Anspruch 1, **dadurch gekennzeichnet, dass** auf der Vorderseite (111) des Tragrahmens (1) ein Transportweg (12) für zu versiegelnde Folienteile ausgebildet ist, wobei der Transportweg (12) sich entlang einer Längsrichtung (L) des Tragrahmens (1) erstreckt und durch zwei einander gegenüberliegende Führungen (121, 122) gebildet wird, die sich senkrecht zur Hauptebene (11) entlang der Längsrichtung (L) des Tragrahmens (1) erstrecken und einteilig mit dem Tragrahmen (1) ausgeführt sind.

3. Tragrahmen (1) nach einem der vorhergehenden Ansprüche, **dadurch gekennzeichnet, dass** das mindestens eine Anbringungselement (13) mindestens ein auf der Vorderseite (111) des Tragrahmens (1) angeordnetes Befestigungselement (131) zur Befestigung einer Heizeinheit (3) aufweist.

4. Tragrahmen (1) nach einem der vorhergehenden Ansprüche, **dadurch gekennzeichnet, dass** das mindestens eine Anbringungselement (13) mindestens ein auf der Rückseite (112) des Tragrahmens (1) angeordnetes Befestigungselement (135) zur Befestigung einer Antriebseinheit (7) aufweist und/oder das mindestens eine Anbringungselement (13) mindestens eine auf der Rückseite (112) des Tragrahmens (1) angeordnete Aufnahme (136) für eine Steuereinheit (6) aufweist und/oder das mindestens eine Anbringungselement (13) mindestens ein auf der Rückseite (112) des Tragrahmens (1) angeordnetes Befestigungselement (137) für eine Steuereinheit (6) aufweist.

5. Tragrahmen (1) nach einem der vorhergehenden Ansprüche, **dadurch gekennzeichnet, dass** das mindestens eine Anbringungselement (13) mindestens eine Aufnahme (132) für ein Lager einer Transporteinheit (4) zum Transport von zu versiegelnden Folienteilen aufweist.

6. Tragrahmen (1) nach einem der vorhergehenden Ansprüche, **dadurch gekennzeichnet, dass** das mindestens eine Anbringungselement (13) mindestens eine Aufnahme (134) für ein Lager einer Siegeleinheit (5) aufweist.

7. Tragrahmen (1) nach einem der vorhergehenden Ansprüche, **dadurch gekennzeichnet, dass** der Tragrahmen (1) aus einem thermisch isolierenden Material gefertigt ist oder dass der Tragrahmen (1) ein thermisch isolierendes Material aufweist.

8. Tragrahmen (1) nach Anspruch 7, **dadurch gekennzeichnet, dass** das thermisch isolierende Material ein Polyphenylensulfid, PPS, ein Polyetherketon, PEK, Polyetheretherketon, PEEK, ein Polyamid, PA, ein Polyoxymethylen, POM, ein Polysulfon, PSU, ein Polyethersulfon, PES, ein Polyethersulfon Ultrasulfon, PPSU, ein Polyimid, PI, ein Polyetherimid, PEI, ein Polyamidimid, PAI, oder ein Polyvinylidendifluorid, PVDF, ist.

9. Tragrahmen (1) nach einem der vorhergehenden Ansprüche, **dadurch gekennzeichnet, dass** der Tragrahmen (1) auf der Vorderseite (111) und/oder auf der Rückseite (112) Versteifungsrippen (14) aufweist.

10. Tragrahmen (1) nach einem der vorhergehenden Ansprüche, **dadurch gekennzeichnet, dass** der Tragrahmen (1) einteilig ausgeführt ist.

11. Tragrahmen (1) nach einem der Ansprüche 1 bis 9, **dadurch gekennzeichnet, dass** der Tragrahmen (1) aus zwei Bauteilen (1A, 1B) besteht, die miteinander verbunden sind.

12. Tragrahmen (1) nach Anspruch 11, **dadurch gekennzeichnet, dass** der Tragrahmen (1) entlang der Längsrichtung (L) in ein oberes Bauteil (1A) und ein unteres Bauteil (1B) geteilt ist, wobei eine sich entlang der Längsrichtung (L) erstreckende Unterseite des oberen Bauteils (1A) eine senkrecht zur Hauptebene (11) ausgebildete obere Führung (121) auf der Vorderseite (111) des Tragrahmens (1) bildet und eine sich entlang der Längsrichtung (L) erstreckende Oberseite des unteren Bauteils (1B) eine senkrecht zur Hauptebene (11) ausgebildete untere Führung (122) auf der Vorderseite (111) des Tragrahmens (1) bildet, wobei die obere und die untere Führung (121, 122) zusammenwirken, um einen Transportweg (12) für zu versiegelnde Folienteile zu bilden.

13. Siegelgerät (2) zur Versiegelung von Kunststofffolien, mit einem Gehäuse, wobei innerhalb des Gehäuses ein Tragrahmen (1) angeordnet ist, wobei der Tragrahmen (1) eine Hauptebene (11) mit einer Vorderseite (111) und einer Rückseite (112) aufweist, und wobei der Tragrahmen (1) einen Gehäuseinnenraum (21) in einen die Vorderseite (111) beinhaltenden vorderen Bereich (211) und einen die Rückseite (112) beinhaltenden hinteren Bereich (212) teilt, wobei in dem vorderen Bereich (211) eine Heizeinheit (3), eine Transporteinheit (4) zum Transport zu versiegelnder Folienteile und eine Siegeleinheit (5) angeordnet sind, und in dem hinteren Bereich (212) eine Steuereinheit (6) angeordnet ist, **dadurch gekennzeichnet, dass** der Tragrahmen (1) ein Tragrahmen (1) nach einem der vorhergehenden Ansprüche 1 bis 12 ist.

14. Siegelgerät (2) nach Anspruch 13, **dadurch gekennzeichnet, dass** die Heizeinheit (3) an mindestens einem auf der Vorderseite (111) des Tragrahmens (1) angeordneten Befestigungselement (131) befestigt ist, mindestens ein Lager der Transporteinheit (4) in einer Aufnahme (132) des Tragrahmens (1) gelagert ist und mindestens ein Lager der Siegeleinheit (5) in einer Aufnahme (134) des Tragrahmens (1) gelagert ist.

15. Herstellungsverfahren für einen Tragrahmen (1) für ein Siegelgerät (2) nach einem der Ansprüche 1 bis 12, **dadurch gekennzeichnet, dass** der Tragrahmen (1) durch ein Spritzgussverfahren hergestellt wird.

## Claims

1. Support frame (1) for a sealing device (2) for sealing films, wherein the support frame (1) comprises a main plane (11) with a front side (111) and a rear side (112), which, when installed in a sealing device (2), divides a housing interior (21) into a front region (211) comprising the front side (111) and a rear region (212) comprising the rear side (112), wherein the support frame (1) comprises at least one attachment element (13) for attaching a functional component of a sealing device (2), **characterized in that** the support frame (1) is a thermally insulating support frame, wherein the support frame (1) comprises a thermally insulating material, wherein the thermally insulating material has a thermal conductivity λ of 7 W/(m·K) or less.

2. Support frame (1) according to claim 1, **characterized in that** a transport path (12) for film parts to be sealed is formed on the front side (111) of the support frame (1), wherein the transport path (12) extends along a longitudinal direction (L) of the support frame (1) and is formed by two mutually opposite guides (121, 122), which extend perpendicular to the main plane (11) along the longitudinal direction (L) of the support frame (1) and are formed in one piece with the support frame (1).

3. Support frame (1) according to any one of the preceding claims, **characterized in that** the at least one attachment element (13) comprises at least one fastening element (131), arranged on the front side (111) of the support frame (1), for fastening a heating unit (3).

4. Support frame (1) according to any one of the preceding claims, **characterized in that** the at least one attachment element (13) comprises at least one fastening element (135), arranged on the rear side (112) of the support frame (1), for fastening a drive unit (7), and/or the at least one attachment element (13) comprises at least one receptacle (136), arranged on the rear side (112) of the support frame (1), for a control unit (6), and/or the at least one attachment element (13) comprises at least one fastening element (137), arranged on the rear side (112) of the support frame (1), for a control unit (6).

5. Support frame (1) according to any one of the preceding claims, **characterized in that** the at least one attachment element (13) comprises at least one receptacle (132) for a bearing of a transport unit (4) for transporting film parts to be sealed.

6. Support frame (1) according to any one of the preceding claims, **characterized in that** the at least one attachment element (13) comprises at least one receptacle (134) for a bearing of a sealing unit (5).

7. Support frame (1) according to any one of the preceding claims, **characterized in that** the support frame (1) is made of a thermally insulating material or **in that** the support frame (1) comprises a thermally insulating material.

8. Support frame (1) according to claim 7, **characterized in that** the thermally insulating material is a polyphenylene sulfide, PPS, a polyether ketone, PEK, polyether ether ketone, PEEK, a polyamide, PA, a polyoxymethylene, POM, a polysulfone, PSU, a polyethersulfone, PES, a polyethersulfone ultrasulfone, PPSU, a polyimide, PI, a polyetherimide, PEI, a polyamide-imide, PAI, or a polyvinylidene difluoride, PVDF.

9. Support frame (1) according to any one of the preceding claims, **characterized in that** the support frame (1) has stiffening ribs (14) on the front side (111) and/or on the rear side (112).

10. Support frame (1) according to any one of the preceding claims, **characterized in that** the support frame (1) is formed in one piece.

11. Support frame (1) according to any one of claims 1 to 9, **characterized in that** the support frame (1) consists of two components (1A, 1B), which are connected to one another.

12. Support frame (1) according to claim 11, **characterized in that** the support frame (1) is divided along the longitudinal direction (L) into an upper component (1A) and a lower component (1B), wherein an underside of the upper component (1A) extending along the longitudinal direction (L) forms, on the front side (111) of the support frame (1), an upper guide (121) formed perpendicular to the main plane (11), and an upper side of the lower component (1B) extending along the longitudinal direction (L) forms, on the front side (111) of the support frame (1), a lower guide (122) formed perpendicular to the main plane (11), wherein the upper and the lower guide (121, 122) cooperate to form a transport path (12) for film parts to be sealed.

13. Sealing device (2) for sealing plastic films, having a housing, wherein a support frame (1) is arranged within the housing, wherein the support frame (1) comprises a main plane (11) with a front side (111) and a rear side (112), and wherein the support frame (1) divides a housing interior (21) into a front region (211) comprising the front side (111) and a rear region (212) comprising the rear side (112), wherein a heating unit (3), a transport unit (4) for transporting film parts to be sealed, and a sealing unit (5) are arranged in the front region (211), and a control unit (6) is arranged in the rear region (212), **characterized in that** the support frame (1) is a support frame (1) according to any one of the preceding claims 1 to 12.

14. Sealing device (2) according to claim 13, **characterized in that** the heating unit (3) is fastened to at least one fastening element (131) arranged on the front side (111) of the support frame (1), at least one bearing of the transport unit (4) is mounted in a receptacle (132) of the support frame (1), and at least one bearing of the sealing unit (5) is mounted in a receptacle (134) of the support frame (1).

15. Manufacturing method for a support frame (1) for a sealing device (2) according to any one of claims 1 to 12, **characterized in that** the support frame (1) is manufactured by an injection molding process.

## Revendications

1. Cadre de support (1) pour un appareil de scellage (2) destiné au scellage de films, dans lequel le cadre de support (1) présente un plan principal (11) avec une face avant (111) et une face arrière (112), qui, lors de l'installation dans un appareil de scellage (2), divise un espace intérieur de boîtier (21) en une zone avant (211) comprenant la face avant (111) et une zone arrière (212) comprenant la face arrière (112), dans lequel le cadre de support (1) présente au moins un élément de montage (13) destiné au montage d'un composant fonctionnel d'un appareil de scellage (2), **caractérisé en ce que** le cadre de support (1) est un cadre de support thermiquement isolant, dans lequel le cadre de support (1) comprend un matériau thermiquement isolant, dans lequel le matériau thermiquement isolant présente une conductivité thermique λ de 7 W/(m·K) ou moins.

2. Cadre de support (1) selon la revendication 1, **caractérisé en ce qu'**un trajet de transport (12) pour des parties de film à sceller est formé sur la face avant (111) du cadre de support (1), dans lequel le trajet de transport (12) s'étend le long d'une direction longitudinale (L) du cadre de support (1) et est formé par deux guides (121, 122) opposés l'un à l'autre, qui s'étendent perpendiculairement au plan principal (11) le long de la direction longitudinale (L) du cadre de support (1) et sont réalisés d'une seule pièce avec le cadre de support (1).

3. Cadre de support (1) selon l'une quelconque des revendications précédentes, **caractérisé en ce que** ledit au moins un élément de montage (13) comprend au moins un élément de fixation (131), disposé sur la face avant (111) du cadre de support (1), destiné à fixer une unité de chauffage (3).

4. Cadre de support (1) selon l'une quelconque des revendications précédentes, **caractérisé en ce que** ledit au moins un élément de montage (13) comprend au moins un élément de fixation (135), disposé sur la face arrière (112) du cadre de support (1), destiné à fixer une unité d'entraînement (7), et/ou ledit au moins un élément de montage (13) comprend au moins un logement (136), disposé sur la face arrière (112) du cadre de support (1), pour une unité de commande (6), et/ou ledit au moins un élément de montage (13) comprend au moins un élément de fixation (137), disposé sur la face arrière (112) du cadre de support (1), pour une unité de commande (6).

5. Cadre de support (1) selon l'une quelconque des revendications précédentes, **caractérisé en ce que** ledit au moins un élément de montage (13) comprend au moins un logement (132) pour un palier d'une unité de transport (4) destinée au transport de parties de film à sceller.

6. Cadre de support (1) selon l'une quelconque des revendications précédentes, **caractérisé en ce que** ledit au moins un élément de montage (13) comprend au moins un logement (134) pour un palier d'une unité de scellage (5).

7. Cadre de support (1) selon l'une quelconque des revendications précédentes, **caractérisé en ce que** le cadre de support (1) est fabriqué à partir d'un matériau thermiquement isolant ou **en ce que** le cadre de support (1) comprend un matériau thermiquement isolant.

8. Cadre de support (1) selon la revendication 7, **caractérisé en ce que** le matériau thermiquement isolant est un sulfure de polyphénylène, PPS, une polyéthercétone, PEK, une polyétheréthercétone, PEEK, un polyamide, PA, un polyoxyméthylène, POM, une polysulfone, PSU, une polyéthersulfone, PES, une polyéthersulfone Ultrasulfon, PPSU, un polyimide, PI, une polyétherimide, PEI, un polyamide-imide, PAI, ou un polyfluorure de vinylidène, PVDF.

9. Cadre de support (1) selon l'une quelconque des revendications précédentes, **caractérisé en ce que** le cadre de support (1) présente des nervures de rigidification (14) sur la face avant (111) et/ou sur la face arrière (112).

10. Cadre de support (1) selon l'une quelconque des revendications précédentes, **caractérisé en ce que** le cadre de support (1) est réalisé d'une seule pièce.

11. Cadre de support (1) selon l'une quelconque des revendications 1 à 9, **caractérisé en ce que** le cadre de support (1) est constitué de deux composants (1A, 1B), qui sont reliés l'un à l'autre.

12. Cadre de support (1) selon la revendication 11, **caractérisé en ce que** le cadre de support (1) est divisé le long de la direction longitudinale (L) en un composant supérieur (1A) et un composant inférieur (1B), dans lequel une face inférieure du composant supérieur (1A) s'étendant le long de la direction longitudinale (L) forme, sur la face avant (111) du cadre de support (1), un guide supérieur (121) réalisé perpendiculairement au plan principal (11), et une face supérieure du composant inférieur (1B) s'étendant le long de la direction longitudinale (L) forme, sur la face avant (111) du cadre de support (1), un guide inférieur (122) réalisé perpendiculairement au plan principal (11), dans lequel le guide supérieur et le guide inférieur (121, 122) coopèrent pour former un trajet de transport (12) pour des parties de film à sceller.

13. Appareil de scellage (2) destiné au scellage de films plastiques, comprenant un boîtier, dans lequel un cadre de support (1) est disposé à l'intérieur du boîtier, dans lequel le cadre de support (1) présente un plan principal (11) avec une face avant (111) et une face arrière (112), et dans lequel le cadre de support (1) divise un espace intérieur de boîtier (21) en une zone avant (211) comprenant la face avant (111) et une zone arrière (212) comprenant la face arrière (112), dans lequel une unité de chauffage (3), une unité de transport (4) destinée au transport de parties de film à sceller et une unité de scellage (5) sont disposées dans la zone avant (211), et une unité de commande (6) est disposée dans la zone arrière (212), **caractérisé en ce que** le cadre de support (1) est un cadre de support (1) selon l'une quelconque des revendications précédentes 1 à 12.

14. Appareil de scellage (2) selon la revendication 13, **caractérisé en ce que** l'unité de chauffage (3) est fixée à au moins un élément de fixation (131) disposé sur la face avant (111) du cadre de support (1), au moins un palier de l'unité de transport (4) est monté dans un logement (132) du cadre de support (1), et au moins un palier de l'unité de scellage (5) est monté dans un logement (134) du cadre de support (1).

15. Procédé de fabrication d'un cadre de support (1) pour un appareil de scellage (2) selon l'une quelconque des revendications 1 à 12, **caractérisé en ce que** le cadre de support (1) est fabriqué par un procédé de moulage par injection.
